# FASCICULE DE BREVET EUROPEEN

(11) **EP 3 672 107 B1**
(45) Date de publication et mention de la délivrance du brevet: **16.03.2022**
(21) Numéro de dépôt: 18020644.3
(22) Date de dépôt: 19.12.2018
(51) Int. Cl.: H04B 10/116

(54) **APPAREILLAGE DE DISTRIBUTION ÉLECTRIQUE ÉQUIPÉ DE MODULES AMOVIBLES COMMUNIQUANT PAR FAISCEAUX OPTIQUES SANS FILS**
ELEKTRISCHE VERTEILERANLAGE, DIE MIT ENTFERNBAREN MODULEN AUSGESTATTET IST, DIE ÜBER DRAHTLOSE OPTISCHE STRAHLENBÜNDEL KOMMUNIZIEREN
ELECTRICAL DISTRIBUTION SYSTEM PROVIDED WITH REMOVABLE MODULES COMMUNICATING BY WIRELESS OPTICAL BEAMS

(43) Date de publication de la demande: 24.06.2020
(73) Titulaire: Bonnet, Caroline, 76200 Dieppe (FR)
(72) Inventeur: Bonnet, Caroline, 76200 Dieppe (FR)

(56) Documents cités:
- WO-A1-2013/032954
- CN-A- 102 624 452
- US-A1- 2018 228 000

## Description

La présente invention concerne un appareillage de distribution électrique modulaire et configurable constitué de canalisations préfabriquées équipées de logements creux recevant des modules électroniques amovibles permettant l'échange de messages numériques entre eux par faisceaux optiques sans fils à l'intérieur des canalisations.

### CONTEXTE DE L'INVENTION

Le besoin de réduction de la facture énergétique des bâtiments ainsi que l'essor de la communication de données en environnement professionnel et domestique conduisent à rendre les bâtiments de plus en plus « intelligents », c'est-à-dire à intégrer dans leur gestion continuelle de multiples fonctions de contrôle et de commande de nombreux dispositifs, qu'ils concernent le chauffage, la climatisation, l'éclairage, l'échange d'informations avec et entre les occupants, les systèmes de sécurité et d'alarme, de localisation...etc.

Dans le domaine industriel, la collecte et la transmission de données en temps-réel entre les postes de travail et de gestion ou de coordination ouvre un potentiel nouveau d'amélioration de la performance et de la qualité au bénéfice de la productivité et de la compétitivité de l'entreprise. La numérisation de l'industrie représente un enjeu économique et technique important.

Dans le domaine commercial, la communication individualisée avec le consommateur dans un espace de vente ainsi que l'analyse des pratiques de consommation sont des sources d'amélioration du service et de croissance de la rentabilité économique.

Pour d'autres applications tel que la logistique, la possibilité de localiser un mobile dans un entrepôt et suivre son parcours tout en échangeant des informations est un facteur d'amélioration de l'efficacité des opérations et d'optimisation de leur coût.

Pour toutes ces applications et bien d'autres présentes ou à venir, la communication avec les dispositifs ainsi qu'avec les utilisateurs mobiles impose de mettre en œuvre des solutions exemptes de raccordements filaires.

Des solutions techniques répondent à ce besoin de transport de données, soit en utilisant les ondes hertziennes (radio fréquence, Wifi, Internet), soit en utilisant la lumière (IrDA, VLC, LiFi). Pour autant, l'essor extrême du nombre de communications hertziennes par l'Internet des objets (loT) expose inévitablement à un problème de saturation des bandes passantes et de perturbation électromagnétique de l'environnement dont la conséquence de santé publique est pour l'instant incertaine. La vulnérabilité à l'interception de ces communications due à leur propagation diffuse est également une source majeure d'insécurité.

Bien que la communication puisse s'envisager sans fil, les équipements, appareils et machines équipant les bâtiments, dont le contrôle et le pilotage conditionnent la performance énergétique, utilisent pour s'alimenter, le secteur électrique. Dans l'ensemble de ces équipements, on peut citer les dispositifs d'éclairage qui nécessitent d'être répartis au plus près du besoin en de nombreux points des espaces. Il n'est donc pas possible de s'affranchir totalement de toute connexion filaire dès l'instant où une alimentation électrique, qui plus est multiphasée, doit être distribuée dans un espace intérieur ou extérieur.

Le cas de l'éclairage est particulièrement représentatif de ce besoin de distribution d'alimentation électrique en de multiples points dans les bâtiments tertiaires. La conjonction de l'alimentation secteur et des divers réseaux filaires de communication génère systématiquement une densité et une complexité extrême du câblage dans les plénums des faux plafonds.

L'Etat de l'Art actuel propose également une solution consistant à utiliser le courant électrique du secteur comme vecteur de propagation des signaux de communication. Cette technique appelée « courant porteur » présente néanmoins des limitations quant au volume et à la densité des communications ainsi qu'en cas de multiplicité des phases de courant secteur. Elle est également génératrice de sévères perturbations électromagnétiques qui peuvent s'avérer prohibitives dans certains cas. La technique du courant porteur n'est donc pas une réponse universelle au besoin de communication haut débit.

La sophistication de l'équipement des bâtiments intelligents complexifie les phases d'installation et de mise en service ainsi que les opérations de maintenance. Le coût de ces prestations indispensables, réclamant une technicité élevée est un frein au déploiement de ces systèmes intelligents. Par ailleurs, l'impossibilité de modifier aisément une installation électrique au fur et à mesure de l'évolution du besoin des utilisateurs et des changements dans l'agencement du bâtiment limite l'efficacité des solutions existantes.

Pour répondre à ces besoins, il s'avère utile de concevoir un procédé technique qui apporte un résultat performant en termes de communication sécurisée et non polluante sur le plan électromagnétique, tout en facilitant l'installation sur site, la mise en service, la maintenance et qui permette de réaliser des modifications de l'infrastructure électrique et de communication au fur et à mesure de l'évolution du besoin des utilisateurs.

### ETAT DE L'ART ANTERIEUR

L'état de la technique le plus proche du procédé objet de la présente demande est décrit dans le document CN 102624452A qui présente un appareillage caractérisé en ce qu'il est constitué d'une canalisation tubulaire rectiligne préfabriquée isolant l'intérieur de la canalisation de la lumière ambiante extérieure ainsi qu'un ou plusieurs dispositifs de communication numérique par faisceau optique en espace libre.

La description de cet appareillage, tel qu'exposée dans le document CN102624452A se rapporte à un système assurant l'échange de données numériques entre des dispositifs installés de façon fixe et définitive à l'intérieur de la canalisation qui est représentée comme une gaine souple assurant l'isolation de son volume intérieur par rapport à la lumière ambiante extérieure.

La particularité du procédé réside dans l'utilisation de faisceaux lumineux suffisamment intenses pour véhiculer l'énergie photoélectrique nécessaire afin d'alimenter électriquement le module électronique récepteur, cette énergie photoélectrique étant également modulée pour véhiculer des messages numériques.

Selon ce principe, le module récepteur est équipé d'une cellule photovoltaïque convertissant l'énergie lumineuse l'éclairant en énergie électrique et d'un circuit démodulateur dont la fonction est de convertir la forme de l'onde électrique produite par la cellule photovoltaïque en message numérique.

En ce sens, l'invention décrite dans le document CN 102624452A applique le procédé optique VLC ou LiFi dans le volume confiné constitué par l'intérieur d'une gaine isolée de la lumière ambiante extérieure, la particularité discriminante résidant dans l'absence de besoin d'alimentation électrique distincte au niveau du dispositif récepteur pour assurer son fonctionnement propre ainsi que la retransmission de l'information numérique qu'il a reçue vers un autre dispositif de même nature.

Hormis le fait qu'une telle cascade de transmissions produit inévitablement un affaiblissement notable de l'énergie photoélectrique qui limite fortement le nombre de dispositifs que peut contenir la gaine, la technique décrite dans le document CN 102624452A ne concerne pas des dispositifs dotés d'une fonctionnalité de communication optique sans fil bidirectionnelle, caractérisés par le fait qu'ils sont amovibles et s'installent dans les logements creux équipant une canalisation rectiligne.

L'invention objet de la présente demande révèle donc une activité inventive en ce que l'état de l'art ne décrit pas de canalisation dans laquelle des logements creux permettraient de recevoir des dispositifs amovibles possédant une capacité d'échanger des messages numériques par communication optique sans fil (FSO) à l'intérieur de la canalisation. Par ailleurs, cette fonctionnalité ne découle pas de façon évidente de l'état de la technique existante.

### DESCRIPTION DE L'INVENTION

Le procédé, objet de la présente invention permet de construire un réseau de distribution électrique et de communication haut débit de façon simple par l'assemblage de canalisations préfabriquées. Chaque canalisation est configurable en insérant dans les logements creux dont elle est pourvue des modules électroniques amovibles remplissant différentes fonctions, dont la transmission et la réception de messages numériques par faisceaux optiques sans fil, à l'intérieur de la canalisation.

Des canalisations, pouvant être de différentes longueurs et de différentes formes, permettent de construire en les assemblant l'une à la suite de l'autre un cheminement adapté à la topologie de l'espace à équiper. Les canalisations se réunissent l'une à l'autre par l'emboitement de leur forme ou par l'utilisation d'un accessoire de jonction tel qu'une éclisse. La longueur du cheminement ainsi construit est illimitée. Il peut être suspendu au plafond ou fixé à une paroi en utilisant des attaches adaptées à la forme de la canalisation.

Chaque canalisation contient un bus filaire multiconducteurs destiné à véhiculer une alimentation électrique, par exemple le secteur multiphasé, à l'intérieur de la canalisation. Un connecteur est implanté à chaque extrémité de la canalisation afin de permettre le raccordement du bus d'alimentation filaire d'une canalisation à l'autre pour en assurer la continuité électrique tout au long du cheminement constitué par l'assemblage de multiples canalisations. Au niveau de chaque logement creux destiné à recevoir un module électronique, un connecteur de fond de panier permet à ce module de se raccorder à l'alimentation électrique véhiculée par le bus filaire multiconducteurs.

La canalisation est de section carré, rectangulaire, quadrilatère, circulaire ou ovoïde. Le matériau la constituant peut être métallique ou plastic. Elle peut être réalisée par formage, pliage, filage, emboutissage ou moulage. Sa construction peut assurer différents degrés d'indices de protection normatifs « IP » selon la méthode utilisée pour assembler ses composants qui peut assurer différents degrés d'étanchéité.

La canalisation est construite de telle façon qu'elle constitue un ensemble mécanique creux fermé dans lequel la lumière ambiante extérieure ne peut pénétrer, soit par le formage de son enveloppe, soit par l'assemblage d'un corps et d'un couvercle, ou de deux corps. La disposition des connecteurs et câbles électriques implantés dans la canalisation est faite de telle façon que l'espace intérieur puisse former une cavité libre de tout obstacle visuel dans le sens de sa longueur. Cette propriété est conservée lorsque les canalisations sont assemblées pour former un cheminement rectiligne continu.

Chaque canalisation dispose de plusieurs logements creux répartis avec un intervalle de longueur constante ou variable. Ces logements creux, de conception identique, sont destinés à recevoir chacun un dispositif électronique réalisé sous la forme d'un module amovible qui, lorsqu'il est inséré dans le logement se raccorde au connecteur de fond de panier équipant le logement creux. Ce module est doté d'un couvercle assurant la fermeture du logement creux de telle façon que la canalisation conserve sa propriété mécanique fermée. Cette propriété est respectée dans le cas où un logement creux n'est pas équipé d'un module électronique en disposant à cet emplacement un couvercle servant à fermer la cavité et contribuant à maintenir la rigidité de la canalisation.

Les modules électroniques sont destinés à accomplir diverses fonctions. Les modules sont actifs lorsqu'ils sont dotés d'une capacité de traitement électronique et informatique et passifs lorsqu'ils en sont dépourvus. Dans les fonctions passives, on peut citer les modules permettant de raccorder tout ou partie du bus multiconducteur de la canalisation à une source d'alimentation électrique secteur multiphasé, d'assurer ou rompre la continuité des conducteurs du bus d'une série de canalisations pour isoler des tronçons qui seraient chacun alimentés par des sources secteur différentes. Dans les fonctions actives, on peut citer les modules de contrôle et de pilotage de dispositifs externes tels que des luminaires ou des actionneurs d'automatisme, l'interfaçage d'un ensemble de canalisations avec un réseau externe sans fil ou filaire, l'acquisition de données de capteurs, la communication avec un mobile par liaison optique ou radio...etc. Chaque module peut être implanté dans un logement creux quelconque d'une canalisation.

Les modules actifs sont dotés de deux canaux de communication optique bidirectionnelle sans fil. Ils assurent l'échange de données digitales entre deux modules actifs selon la méthode de la transmission optique en espace libre, dite FSO (Free Space Optics), au travers de la cavité libre d'obstacles visuels que constitue l'intérieur de la canalisation. Le module actif est équipé d'un couple émetteur-récepteur optique implanté à chacune de ses extrémités de telle façon que deux couples optiques ainsi définis, chacun sur un module actif, se font face lorsque ces modules sont insérés l'un à la suite de l'autre dans deux logements creux de la canalisation contigus ou séparés par des modules passifs. La section du module actif est réalisée de telle façon que la face sur laquelle est implanté le couple émetteur/récepteur optique obstrue la canalisation de telle sorte que le faisceau optique reçu par le module ne puisse se propager dans la cavité au-delà de ce module.

La distance séparant deux modules actifs dépend de l'intensité lumineuse du faisceau que peut générer le composant émetteur et de la sensibilité dont dispose le composant récepteur. Cette distance peut atteindre une dizaine de mètres avec des composants émetteurs/récepteur de performance moyenne.

Des modules actifs amovibles particuliers sont conçus pour assurer les changements de direction de tronçons rectilignes de communications optiques afin de permettre de construire des cheminements de canalisations comportant des coudes ayant différents angles. Ces modules actifs sont intégrés dans des éléments de canalisation s'assemblant avec les canalisations rectilignes afin d'orientater le cheminement vers la gauche ou vers la droite. Chaque élément d'angle contient un module électronique actif disposé de telle façon que chacune de ses extrémités équipée d'un couple émetteur/récepteur optique se trouve logé dans la cavité interne de la canalisation à laquelle il est assemblé.

Selon le principe décrit au paragraphe précédent, des modules actifs particuliers sont conçus pour distribuer la communication optique dans plusieurs canalisations. Ces modules actifs sont intégrés dans des éléments de canalisation de forme T ou X destinés à s'assembler avec des canalisations afin de créer des branches multiples dans un réseau de canalisations. Chaque élément en T ou X contient un module électronique actif réalisé de telle façon que chacune de ses extrémités équipée d'un couple émetteur/récepteur optique se trouve logé dans la cavité interne de la canalisation à laquelle il est assemblé.

Les modules passifs, tel qu'évoqués précédemment sont construits de telle façon que leurs composants internes ne créent pas un obstacle visuel entre deux modules actifs empêchant ces deux modules de se viser l'un l'autre selon le principe de la communication optique dite « LOS » (Line of Sight).

La communication optique en espace libre (FSO) peut être réalisée par la modulation d'un faisceau de lumière de différentes natures et différentes longueurs d'onde : visible, invisible, non cohérent ou cohérent. On peut utiliser par exemple des LED blanches, des LED infrarouge, des LED laser pour l'émission et des phototransistors ou capteurs d'image pour la réception. La source émettrice peut être équipée de dispositifs optiques tels que des lentilles, destinés à adapter la forme de son faisceau de lumière, par exemple pour le concentrer.

Chaque module actif gère d'une part ses fonctionnalités propres, comme par exemple le pilotage intelligent d'un ou plusieurs luminaires et d'autre part l'échange de données digitales avec les deux autres modules actifs dont il est voisin, ou le module unique qui lui fait face s'il est situé en extrémité d'un cheminement de canalisations.

Le module actif peut appliquer à la liaison optique différents protocoles de communication selon la nature du réseau constitué par le cheminement de canalisations en termes de débit de transfert et de volume de données à échanger.

Le débit de la communication dépend de la performance des composants photoélectriques choisis pour construire les couples émetteur-récepteur ainsi que du protocole utilisé dans les échanges de données.

En utilisant des LED et phototransistors pour lumière infrarouge, la communication peut appliquer les standards établis par I'IrDA (Infrared Data Association) dont la cadence de transmission de données binaires va de 115 Kbit/sec en mode SIR à 4 Mbit/sec en mode FIR.

La canalisation telle que réalisée selon la description faite précédemment, constitue un conduit optique protégé de l'influence de la lumière extérieure et de ses fluctuations. Le mode de communication optique peut ainsi s'affranchir du besoin d'utiliser une fréquence porteuse pour s'affranchir des perturbations environnementales et peut alors favoriser la rapidité de la transmission photométrique.

Etant donné le rythme élevé de cycles allumage/extinction qui peut être appliqué aux composants LED, la cadence de la transmission peut dépasser 1Gbit/sec. La rapidité de transmission peut être augmentée en réduisant la distance séparant deux modules actifs dans la canalisation afin de limiter l'énergie du faisceau optique pour accélérer les fronts du signal électronique de commande des LED émettrices.

Cette caractéristique différentie le mode de communication selon la présente invention des méthodes de communication appelée « LiFi » ou « VLC » qui conjuguent au niveau d'un luminaire sa fonctionnalité d'éclairage à la transmission unidirectionnelle de données dans l'espace éclairé par le luminaire.

Le canal de communication optique fonctionne en mode bidirectionnel, half duplex ou full duplex selon la réalisation de la canalisation. Le protocole d'échange sur le bus optique peut être basé sur le principe maître-esclave lorsqu'un module électronique est défini comme étant central, ou selon le principe des jetons dit « Token-ring » lorsque les modules sont appelés à transmettre sans adressage préalable par le maître du réseau. Ces modes fonctionnels, dépendant des besoins de l'application, sont gérés par la programmation appliquée aux modules électroniques actifs composant le système de distribution électrique et de communication, objet de la présente invention.

### DESCRIPTION DETAILLEE DES DESSINS

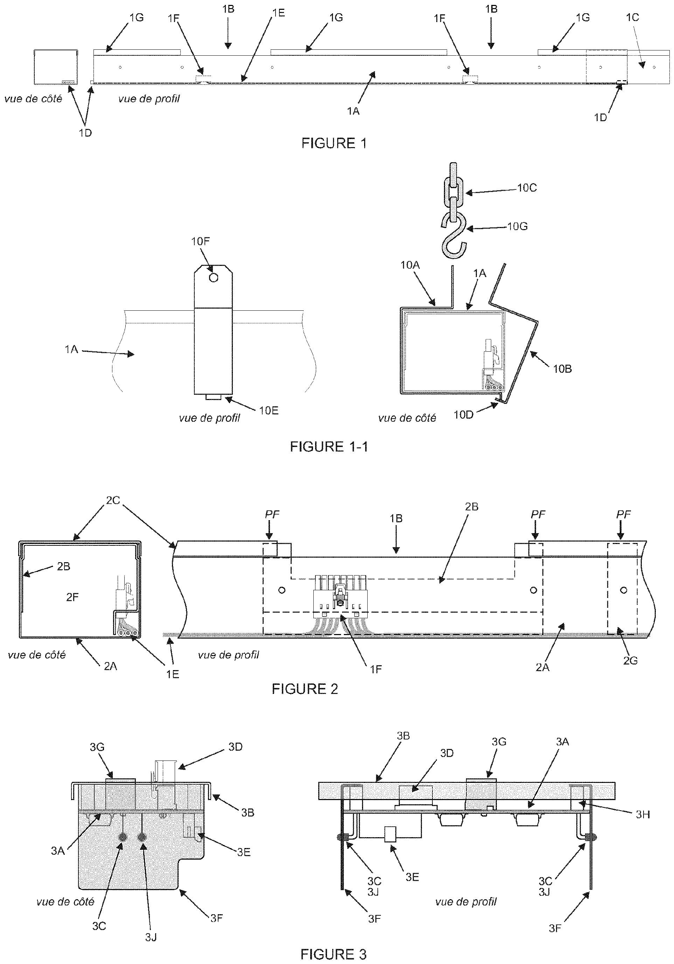

La Figure 1 représente l'appareillage mettant en œuvre le procédé objet de la présente invention, vu de profil et de côté.

Cet appareillage est constitué d'une canalisation dont la longueur est, de préférence inférieure ou égale à 2,4m pour faciliter le transport par camion. La canalisation (1A) est pourvue de plusieurs logements creux (1B) dans lesquels s'insèrent des dispositifs électroniques. Le nombre de logements creux et leur répartition le long de la canalisation est variable en fonction de la densité de modules électroniques nécessaires pour différentes utilisations de l'invention. Dans la représentation de la Figure 1, la canalisation est pourvue de 2 logements (1B).

La canalisation est équipée d'un faisceau de conducteurs électriques (1E) constituant un bus filaire destiné à véhiculer une alimentation à l'intérieur de la canalisation ainsi que la distribution de cette alimentation au niveau de chaque logement creux (1B).

Préférentiellement, cette alimentation est constituée par le secteur multiphasé, néanmoins, elle pourrait être de différentes natures telles qu'une alimentation continue ou alternative provenant d'un générateur solaire photovoltaïque ou éolien.

Le bus filaire (1E) est équipé d'un connecteur de fond de panier (1F) localisé dans chaque logement creux (1B) et d'un connecteur (1D) localisé à chaque extrémité de la canalisation. Les connecteurs (1D) sont choisis de telle façon qu'ils permettent en s'interconnectant, d'assurer la continuité du bus filaire (1E) lorsque les canalisations sont assemblées l'une à l'autre.

La jonction de deux canalisations est assurée, soit par la géométrie de son extrémité permettant l'emboitement, soit comme représenté sur la Figure 1, par une éclisse (1C) réalisant mécaniquement la jonction rigide des deux canalisations.

La canalisation, telle que représentée sur la Figure 1 est de section rectangulaire et d'une dimension suffisante pour recevoir dans les logements creux (1B) des modules électroniques comprenant un circuit imprimé. Telle que représentée, la canalisation est équipée de couvercles (1G) laissant libre l'accès aux logements creux (1B). La section de la canalisation est de largeur 65 mm et de hauteur 53 mm. Elle peut cependant être de toute autre forme géométrique (carré, circulaire, quadrilatère, ovoïde...) et de toutes autres dimensions. Dans cet exemple, la longueur d'un logement creux pour module électronique est de 150 mm.

La canalisation (1A) est destinée à être suspendue au plafond ou directement fixée sur une paroi. Selon sa résistance mécanique en fonction de sa construction qui tire parti de sa forme tubulaire, elle peut supporter des équipements extérieurs, tels que des luminaires ou des capteurs qui lui sont accrochés ou suspendus par des attaches appropriées, et son connectés aux modules électroniques implantés dans les logements creux de la canalisation.

La Figure 1-1 présente un exemple de réalisation d'une bride permettant la suspension d'une canalisation (1A) au plafond grâce à une chainette (10C) et un crochet S (10G) inséré dans le trou (10F) de la bride. Cette même bride peut également être utilisée pour suspendre à la canalisation un équipement tel qu'un luminaire en montant la bride sur la canalisation dans le sens opposé à celui indiqué sur la figure et en accrochant le luminaire par une suspente fixée au trou (10F), dirigé vers le bas.

Dans cette réalisation, la bride est constituée de deux pièces. La pièce (10B) s'assemble sur la pièce (10A) par l'insertion de sa languette (10E) dans la lumière (10D) dans la pièce (10B). Une fois la pièce (10B) refermée, la chainette (10C) est accrochée à la bride en utilisant un crochet S (10G) engagé dans les trous (10F) des pièces (10A) et (10B) superposés. Tout autre moyen peut être utilisé pour suspendre la bride, tel que par exemple un câble serti sur une manille vissée.

Un cheminement de canalisations assemblées les unes aux autres est suspendu en répartissant un nombre suffisant de brides le long du cheminement, en fonction de sa masse. La forme de la bride, telle que présentée sur la Figure 1-1 présente l'avantage de faciliter son montage sur la canalisation grâce à ses deux parties (10A) et (10B) dissociées ainsi que par le fait qu'elle peut librement coulisser le long de la canalisation pour être positionnée à l'aplomb d'un point de fixation de la chainette (10C) au plafond de la pièce.

La Figure 2 représente le détail de la canalisation (1A) à l'endroit d'un logement creux pour module électronique (1B), tel qu'indiqué sur la Figure 1.

Le logement est pourvu d'un bâti (2B) inséré dans le corps (2A) de la canalisation auquel il est fixé par tout moyen tel que par exemple des vis, des rivets ou des points de soudure.

Le bâti (2B) est conçu pour recevoir un connecteur de fond de panier (1F) servant au raccordement du module électronique au bus filaire d'alimentation (1E) traversant la canalisation.

Le connecteur (1F) est positionné de telle façon que la canalisation (1A) constitue une cavité (2F) libre de tout obstacle visuel dans le sens de sa longueur. Cette propriété est conservée lorsque plusieurs canalisations sont assemblées, par exemple en utilisant des éclisses de jonction (1C). Dans la représentation de la Figure 2, la canalisation est constituée d'un corps (2A) et de tronçons de couvercles (2C) fixés sur les bâtis (2B) ainsi que sur les éclisses de jonction (1C). Le corps (2A) est pourvu de soyages assurant l'ajustement du couvercle (2C). Les tronçons de couvercle (2C) sont fixés en des points (PF) par vis ou rivets.

Des pièces en forme de portique (2G) sont disposés dans la canalisation, fixés au corps (2A) ainsi qu'aux tronçons de couvercle (2C) afin d'assurer une parfaite rigidité de la canalisation.

La Figure 3 représente en détail un module électronique destiné à être inséré dans un logement creux (1B) de la canalisation.

Dans cet exemple de réalisation, le module électronique est destiné au pilotage de luminaires ainsi qu'à l'opération de fonctions annexes tel que la collecte d'informations fournies par des capteurs environnementaux mesurant, par exemple, la lumière ambiante ou détectant la présence ou le déplacement de personnes et/ou de véhicules.

Ce module électronique est constitué d'un circuit imprimé (3A) supportant des composants électroniques, fixé par des entretoises (3H) à un couvercle (3B) prévu pour s'assembler avec le corps (2A) de la canalisation (1A) de façon à fermer le logement creux (1B) lorsque le module électronique est en place. La carte électronique est pourvue d'une embase de connexion (3E) positionnée de telle façon qu'elle se raccorde au connecteur de fond de panier (1F) équipant le logement creux (1B) pour raccorder le circuit imprimé (3A) à l'alimentation véhiculée par le bus filaire (1E).

La carte électronique est dotée d'un connecteur (3D) débouchant au travers du couvercle (3B) afin de permettre le branchement des luminaires, ainsi qu'un second connecteur (3G) destiné au raccordement des dispositifs externes tel que les capteurs de lumière ambiante et/ou détecteurs de mouvement.

Dans une réalisation préférentielle, le connecteur (3D) distribue l'alimentation ainsi que les signaux de contrôle selon le standard international DALI permettant, entres autres fonctions, de commander la gradation de luminaires compatibles avec ce standard.

La carte électronique (3A) comprend un microprocesseur assurant par son programme l'exécution des fonctions de pilotage des luminaires raccordés sur le connecteur (3D), entres autres critères, en fonction des informations fournies par les capteurs raccordés à la carte (3A) par le connecteur (3G) et/ou en fonction des informations reçues par le module électronique, par la liaison optique sans fils.

La carte (3A) est dotée de deux dispositifs émetteur/récepteur optoélectroniques composés chacun d'un émetteur (3C) et d'un récepteur (3J) disposés à chacune de ses extrémités, débouchant au travers de deux flasques (3F) fixés au couvercle (3B). La forme du flasque est conçue de telle façon qu'il obstrue la cavité (2F) de la canalisation (1A) lorsque le module électronique est en place dans le logement creux (1B), afin qu'une onde lumineuse émise dans la canalisation atteignant le flasque (3F) ne puisse se propager au-delà. Préférentiellement, la surface externe du flasque (3F) est traitée de telle façon que la réverbération optique des signaux qu'il reçoit soit atténuée, voire annulée. Pour cela, par exemple, la surface peut être de couleur noir mat.

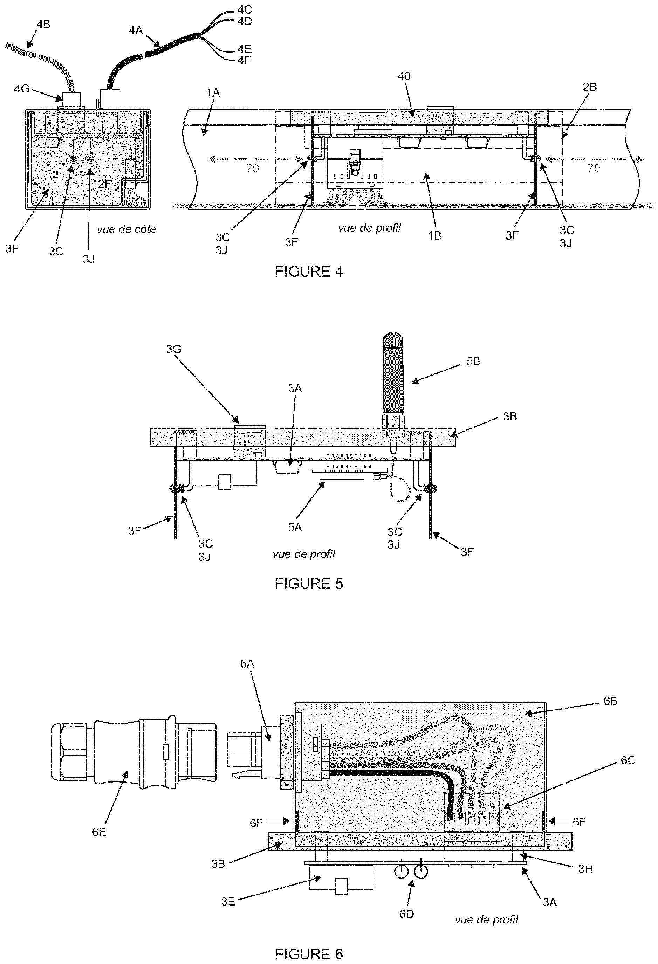

La Figure 4 présente le détail d'un logement creux (1B) équipé du module électronique décrit par la Figure 3, assemblé dans le bâti (2B).

Le flasque (3F) équipé du couple émetteur/récepteur optoélectronique (3C-3J) obstrue la cavité (2F) de la canalisation de telle façon que seuls les composants de communication optique (3C-3J) débouchant au travers du flasque ont accès au faisceau lumineux existant dans cette portion de cavité.

Les luminaires sont raccordés par le câble électrique multiconducteurs (4A) distribuant l'alimentation secteur (4C) et (4D) ainsi que les deux signaux de communication (4E) et (4F) compatibles avec le standard DALI qui permet de contrôler un nombre maximal de 64 luminaires compatibles avec ce standard.

Les dispositifs externes tels que des capteurs sont raccordés par le câble multiconducteur (4B) équipé d'un connecteur (4G), par exemple de type RJ45.

La Figure 5 représente un module électronique destiné à permettre la communication entre un cheminement constitué par l'assemblage de multiples canalisations (1A) et un réseau externe sans fil de type radiofréquence.

Le module électronique dont l'architecture mécanique est compatible avec les logements creux (1B) des canalisations, est équipé d'une carte électronique (3A) disposant d'un modem radiofréquence (5A) relié à une antenne (5B) débouchant de son couvercle (3B).

Un connecteur auxiliaire (3G) permet le raccordement de dispositifs externes tel que des capteurs selon le même procédé que celui présenté sur la Figure 4.

La carte électronique (3A) est dotée d'un microprocesseur dont le programme exécute divers fonctions pouvant assurer la gestion des autres modules électroniques implantés dans le cheminement, par exemple en leur communiquant des ordres, en collectant les données qu'ils élaborent et en les mémorisant, en diagnostiquant les défauts de fonctionnement...etc. Certaines de ces fonctionnalités peuvent dépendre de commandes et plus généralement d'échanges de communications avec le réseau sans fil externe par la liaison radiofréquence dont est doté le module électronique représenté sur la Figure 5.

La Figure 6 représente un module électronique passif au sens de la définition énoncée précédemment, dont la fonction est de raccorder une alimentation secteur multiphasé externe au bus filaire (1E) traversant la canalisation (1A).

Ce module électronique dont l'architecture mécanique est compatible avec les logements creux (1B) des canalisations est pourvu d'une carte électronique (3A) assurant le raccordement de conducteurs électriques, par exemple par un bornier à vis débrochable (6C) pour faciliter son assemblage. Les conducteurs sont reliés à une embase de connexion (6A) assurant le branchement du secteur multiphasé par une prise débranchable (6E).

La carte électronique (3A) est pourvue de l'embase de connexion (3E) compatible avec les connecteurs de fond de panier (1F) du bus filaire (1E) des canalisations. La carte (3A) est éventuellement dotée de composants électroniques (6D) de protection contre les surtension et assurant le filtrage selon les règles régissant la compatibilité électromagnétique (CEM). Si nécessaire, la terre du secteur peut être branchée à une entrée du bornier (6C) pour être acheminée par la carte électronique (3A) et une ou plusieurs entretoises (3H) vers l'enveloppe de la canalisation via son couvercle (3B).

Ce module électronique d'entrée d'alimentation est pourvu d'un capot de protection (6B) fixé au couvercle (3B) par des vis (6F).

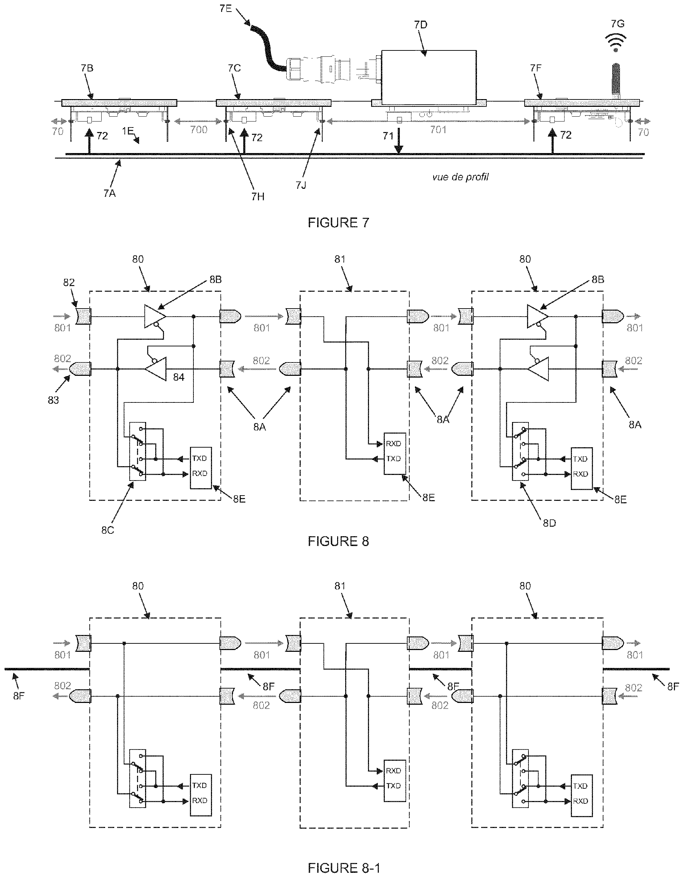

La Figure 7 illustre le fonctionnement des communications entre les modules actifs selon le procédé objet de l'invention.

Le cheminement de canalisations interconnectées (7A) est constitué de multiples canalisations (1A) assemblées l'une à l'autre en assurant également la continuité du bus filaire d'alimentation (1E). De multiples modules électroniques de différents types tels que repérés (7B), (7C) ou (7F) équipent certains des logements creux (1B) des canalisations (1A). Au moins un module électronique passif (7D) raccorde le secteur multiphasé (7E) au bus filaire interne (1E) (71) et sa distribution (72) à chacun des modules électroniques présents dans les canalisations.

Dans la présentation de la Figure 7, un module électronique (7F) assure la communication du cheminement de canalisations (7A) avec un réseau externe radiofréquence (7G).

La communication entre les modules électroniques actifs tels que (7B), (7C), (7F) est assurée par les échanges optiques bidirectionnels (70), (700), (701) générés par les couples émetteur/récepteur équipant chaque module électronique actif.

Comme indiqué sur le schéma, la communication optique dans la cavité interne (2F) le long des canalisations n'est pas gênée par la présence dans le cheminement de modules passifs tel que le module (7D).

Le principe d'une communication directionnelle (700) (701) est décrit ainsi :
Le faisceau de lumière incident (700) émis par le module actif (7B) est converti en signal électrique par le récepteur optoélectronique (7H) et est transmis à l'émetteur optoélectronique (7J) situé sur la face opposée qui le converti en faisceau optique (701) à destination du module (7F) qui lui succède. La présence d'un ou plusieurs modules passifs tels que le module (7D) entre deux modules actifs (7C) et (7F) ne gêne pas la propagation du faisceau (701).

Une communication se propage ainsi à l'intérieur des canalisations par une transmission optique sans fil (FSO) établie entre les modules actifs installés dans le cheminement de canalisations.

Le circuit électronique (3A) capte et analyse les signaux de communication par son microprocesseur afin de gérer les échanges selon le protocole mis en œuvre pour l'application.

La Figure 8 présente le schéma de principe de l'étage électronique assurant la communication optique sans fil (FSO) au niveau des modules électroniques actifs.

L'exemple présenté met en œuvre un protocole de communication « Maître-Esclave » dans lequel le module (81) est le maître d'une série de modules esclaves (80) situés de part et d'autre de sa position dans le cheminement des canalisations (1A). Chaque module est pourvu de deux couples émetteur/récepteur optoélectroniques (8A) comprenant une diode (83) et un phototransistor (82). Les communications optiques sont assurées de façon bidirectionnelle par des faisceaux de lumière (801) et (802). Un seul module maître (81) est présent dans le cheminement de canalisations. Le nombre de modules esclaves (80) logés dans le cheminement est uniquement limité par la dimension du nombre alloué à l'adressage de ces modules dans le protocole de communication. Le module maître (81) émet simultanément sur les deux diodes (83) équipant ses deux couples optoélectroniques (8A) et reçoit simultanément sur ses deux phototransistors (82). Le protocole maître-esclave n'autorisant la transmission que du seul module esclave (80) adressé par le module maître, le conflit que produirait une réception simultanée par les deux phototransistors (82) du module maître est évité. Seul le faisceau optique (801) ou (802) est actif lors d'une réception de données en fonction de la position relative du module esclave (80) par rapport au module maître dans la canalisation.

Chaque module esclave (80) est doté de deux buffers tri state (8B) afin d'assurer l'isolation du faisceau (71) reçu par le récepteur (82) d'un couple émetteur/récepteur (8A) lorsqu'un faisceau (72) est émis par la diode (83) de ce même couple. Ce dispositif est destiné à bloquer la propagation du signal électrique reçu par le phototransistor (82) vers la diode émettrice du couple opposé, cette réception pouvant résulter de la réverbération du faisceau optique émis par la diode (83) sur la paroi constituée par le flasque (3F) équipant le module visé. L'absence d'isolation du canal de réception produirait l'activation systématique de la diode émettrice du couple optoélectronique (8A) de la face opposée qui perturberait alors le faisceau (801) reçu par ce couple et corromprait la communication.

Le montage décrit assure l'isolement du premier canal d'émission activé, tant qu'il est actif et le basculement automatique de l'isolement lorsque le canal d'émission change de couple optoélectronique.

Dans cette configuration, la communication s'opère en mode half-duplex, l'émission du module maître (81) ne pouvant pas coïncider avec l'émission d'un module esclave (80) et plusieurs modules esclaves (80) ne pouvant émettre simultanément. La propagation des faisceaux optiques (800) et (801) est ainsi assurée au travers des modules (80) par le circuit électronique (3A) sans pénaliser la vitesse de transmission à l'intérieur des canalisations autrement que par le temps de réponse des composants optoélectroniques et le temps de propagation au travers des buffers tri state (8B). Ces temps sont extrêmement réduits dès l'instant où on choisit des composants prévus pour la logique rapide tel que le buffer NL17SZ126 de ON Semiconductors dont le temps de propagation typique est de 2,6 ns.

Chaque module esclave (80) est pourvu d'un sélecteur (8C) destiné à affecter les signaux de communication (TXD) et (RXD) de son microprocesseur (8E) au couple optoélectronique concerné en fonction de la direction des faisceaux optiques (800) et (801) qui dépend du positionnement du module (80) par rapport au module maître (81). Dans la position relative présentée sur la Figure 8, le module maître (81) est situé à droite du module esclave (80) représenté sur la gauche du schéma, et à gauche du module esclave (80) représenté sur la droite du schéma.

Dans cette situation, le sélecteur (8C) du premier module (80) est basculé dans le sens présenté et le sélecteur (8D) du second module (80) est basculé dans le sens opposé. Ainsi, les signaux (RXD) et (TXD) assurant la communication par le microprocesseur (8E) équipant le module (80) sont correctement orientés vers le module maître (81), que ce dernier se trouve d'un côté ou de l'autre du module esclave. La propagation des faisceaux optiques, tel que décrite précédemment, assure l'acheminement des messages de données jusqu'au module maître. La réception d'une communication par le module esclave (80) est exclusivement dirigée vers le signal (RXD) de ce module lorsque la réception provient d'une émission faite par le module maître (81). En effet, toute réception provenant du module esclave voisin, en étant bloquée par le buffer tri state (8B) ne peut générer un signal (RXD) au microprocesseur (8E). Ainsi, le contenu du message que transmet un module esclave (80) vers le module maître (81) ne peut être interprété par aucun autre module esclave situé sur le cheminement du faisceau optique comme constituant une interrogation du module maître à son attention.

La réalisation d'une communication en mode full duplex peut être assurée en séparant mécaniquement les faisceaux lumineux ascendants et descendants en installant une cloison séparatrice (8F) à l'intérieur de la canalisation (1A) de façon à créer dans chaque canalisation deux cavités (2F) indépendantes entre chaque logement creux (1B). Dans cette configuration, les échanges optiques entre deux modules actifs peuvent être effectués simultanément en émission et en réception afin d'accélérer la communication. Le schéma de principe de cette variante est présenté sur la Figure 8-1.

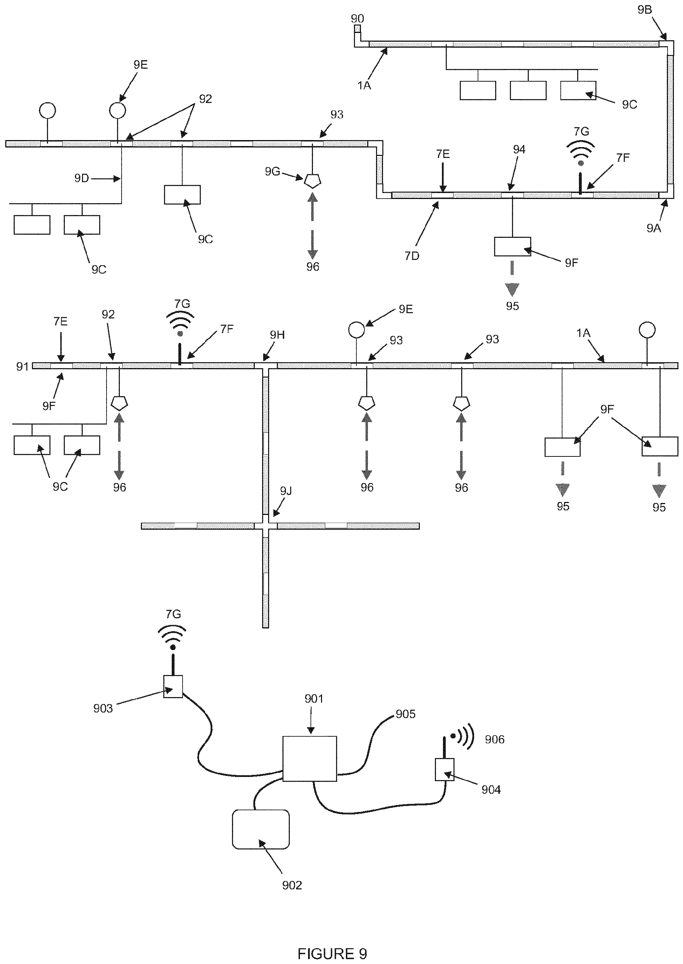

La Figure 9 présente un exemple d'application du procédé objet de la présente invention pour la construction d'un système d'éclairage communicant dans un bâtiment.

Dans cet exemple, une série de canalisations (1A) et de jonctions en angle (9A) orientées vers gauche ou (9B) orientées vers la droite ainsi que des jonctions en T (9H) et en X (9J) sont assemblées pour former deux cheminements (90) et (91) indépendants. Ces cheminements sont suspendus au plafond du site par des brides telles que présentées sur la Figure 1-1.

Certains logements creux (1B) des canalisations sont équipés de modules électroniques et d'autres laissés vacants, selon le besoin de répartition des dispositifs utiles à l'application.

Dans chaque cheminement, un module passif (7D) tel que présenté sur les Figures 6 et 7, assure le raccordement du secteur existant sur le site au bus filaire interne (1E) parcourant les canalisations de chaque cheminement.

Dans cet exemple, les modules électroniques (92) ou (94) sont du type décrit sur la Figure 3, destinés à assurer le pilotage de luminaires. A ces modules sont connectés un ou plusieurs luminaires (9C) compatibles avec le standard DALI, raccordés par le câble électrique (9D) connecté au module (92). Sur certains de ces modules, des capteurs externes (9E) sont raccordés pour mesurer la luminosité ambiante et/ou détecter des mouvements.

D'autres modules électroniques (93) disposent d'une voie de communication externe infrarouge (96) permettant à des mobiles de dialoguer avec ces modules électroniques lorsqu'ils se situent dans le champ de connexion optique.

Les modules électroniques (94) sont dotés, en plus de la fonction de contrôle de luminaires, d'une capacité de transmettre des données (95) par la modulation de l'intensité lumineuse de leur luminaire (9F) selon un procédé de communication VLC (Visual Light Communication).

Dans une configuration de réseau maître-esclave, les modules électroniques cités précédemment constituent un ensemble de modules esclaves dans leur cheminement (90) ou (91). Chaque cheminement est équipé d'un module de communication radiofréquence (7F) assurant également la fonction de module maître dans le cheminement.

L'installation, telle que décrite dans cet exemple de réalisation, comprend un ensemble d'équipements (901 à 906) formant un système de gestion et de commande centralisé. Cet ensemble est constitué d'un ordinateur central (901) faisant fonction d'automate auquel est connecté un écran/clavier tactile (902) assurant l'interface homme-machine, d'un modem de communication radiofréquence (903) et d'un modem de communication Internet (904), préférentiellement compatible avec le réseau 4G. L'automate (901) est également relié au réseau local Ethernet du site (905).

L'automate (901) est programmé pour gérer le fonctionnement de l'éclairage, les échanges d'information avec les cheminements (90) et (91), la liaison avec l'ordinateur de gestion du site via son réseau local Ethernet et la communication avec un serveur externe via le réseau Internet.

Une telle architecture permet la répartition des tâches à différents niveaux. Le module maître (7F) de chaque cheminement (90) et 91) gère le fonctionnement des différents modules esclaves contenus dans son cheminement de canalisations. Il pilote les luminaires (9C) et (9F) individuellement en fonction de critères qui lui sont communiqués par l'automate (901) via la communication radiofréquence (7G), d'informations qu'il collecte auprès des modules électroniques (92) ou (93) dotés de capteurs, d'informations reçues par les canaux de communication optiques infrarouge (96) et de consignes qu'il transmet aux modules (92) et (94).

Les données collectées peuvent être archivées dans la mémoire interne du module maître (7F) pour être traitées par l'automate (901) auquel elles sont transmises via la liaison radiofréquence (7G). Dans le sens opposé, des données et informations délivrées par l'automate (901) via la liaison (7G) peuvent être transmises aux mobiles via la liaison (96) à laquelle il accède selon sa position par rapport aux cheminements ou via les communications optiques réalisées en mode VLC par les luminaires (9F).

Une autre fonctionnalité que peut assurer cette architecture se rapporte à l'identification et la localisation des mobiles se déplaçant dans l'environnement couvert par les cheminements (90) et (91). Pour cela, chaque mobile dispose d'un code d'identification qu'il transmet au module (92) ou (93) équipé d'une interface de communication (9G) en fonction de sa position géographique dans l'espace couvert par les cheminements (90) et (91). Cette information, associée à l'adresse du module électronique qui a opéré la communication dans le cheminement de canalisations permet au module maître (7F) d'identifier le mobile et de le localiser. Cette information peut être communiquée à l'automate (901) par la liaison radiofréquence (7G) pour être gérée par ce dernier.

L'ensemble des informations acquises et/ou élaborées peuvent être gérées par les différents moyens de traitement dont dispose le site ainsi équipé, au niveau de l'automate (901), du système central auquel il est relié par la liaison Ethernet (905) ainsi que par le serveur auquel il est relié par la liaison Internet (906).

Parmi les exploitations du système d'éclairage communicant équipé d'une gestion centralisée, on peut citer la mesure de l'énergie lumineuse fournie par chaque luminaire, exprimée en CLAR(CL)^{®}, le suivi du vieillissement des luminaires et la détection des défaillances. Le nombre de CLAR(CL)^{®} est élaboré continuellement par chaque module électronique contrôlant le fonctionnement de luminaires et est transmis au module maître (7F) pour être acheminé vers l'automate (901) qui le communique par la liaison (906) au serveur Internet du gestionnaire qui peut ainsi facturer la consommation de lumière au client.

Dans les avantage résultant de l'application du procédé objet de la présente invention, on peut citer la possibilité de modifier facilement la position des modules électroniques insérés dans les logement creux des canalisations pour répondre à l'évolution d'un besoin, par exemple dans le cas du changement de l'ergonomie d'un espace de travail qui nécessiterait une modification de la position des luminaires, ou en cas d'extension de la surface à éclairer, ou en cas d'adjonction de points de communication supplémentaires...etc. Ces évolutions s'effectuent sans imposer aucune modification du câblage de la distribution électrique existante sur le site en étendant les cheminements de canalisations et en équipant les nouveaux tronçons de modules électroniques là où ils sont nécessaires pour répondre au besoin.

Un autre avantage procuré par le procédé objet de l'invention est la constitution d'un réseau de communication haut débit jumelé à l'installation d'un système d'éclairage, ledit réseau transportant des données qu'il peut échanger avec des personnes, des machines et des véhicules en de nombreux points du réseau servant également à la localisation des interlocuteurs. Ces fonctionnalités concernent entres-autres applications le domaine de l'industrie numérique.

Un autre avantage procuré par le procédé de communication optique sans fil mis en œuvre dans l'appareillage objet de la présente invention est son immunité aux perturbations électromagnétiques et l'intégrité des communications optiques qui procurent une meilleure fiabilité ainsi qu'une sécurisation élevée par rapport aux liaisons radiofréquences.

Dans le cas de l'équipement de bâtiments tertiaires, le procédé objet de l'invention permet de concentrer de multiples communications dans un même réseau qui assure également la gestion intelligente de l'éclairage. Il en résulte une simplification importante des câblages des bâtiments intelligents qui améliore la fiabilité des communications, réduit le coût de construction et facilite la maintenance.

## Revendications

1. Appareillage de distribution électrique **caractérisé en ce qu'**il est constitué d'une canalisation tubulaire (1A) possédant un ou plusieurs logements creux (1B) destinés à recevoir des dispositifs électroniques amovibles dotés d'une communication par faisceau optique sans fil ,FSO, permettant à ces dispositifs électroniques amovibles d'émettre et recevoir des messages numériques, ladite communication optique sans fil s'effectuant à l'intérieur de la canalisation

2. Appareillage selon la revendication 1 **caractérisé en ce que** la canalisation tel que décrite peut se coupler mécaniquement à une autre canalisation de même nature de façon à construire par assemblage d'une succession de canalisations un ensemble tubulaire continu possiblement composé de plusieurs branches disposant de multiples logements creux destinés à recevoir des dispositifs électroniques amovibles dotés d'une communication par faisceau optique sans fil (FSO) permettant à ces dispositifs électroniques amovibles d'émettre et recevoir des messages numériques, ladite communication optique sans fil s'effectuant à l'intérieur des canalisations.

## Patentansprüche

1. Vorrichtung zur Verteilung von elektrischer Energie: Sie besteht aus einem röhrenförmigen Leitung (1A), der einen oder mehrere Hohlräume (1B) aufweist, die geeignet sind, herausnehmbare elektronische Module aufzunehmen, die mit einer drahtlosen optischen Strahlenkommunikation FSO ausgestattet sind. Sie ermöglicht es, den herausnehmbaren elektronischen Modulen digitale Nachrichten zu senden und zu empfangen, wobei die drahtlose optische Strahlenkommunikation im Inneren der röhrenförmigen Leitungen funktioniert.

2. Vorrichtung nach Anspruch 1, bei der die röhrenförmige Leitung mechanisch an eine weitere Leitung mit identischen Merkmalen gekoppelt werden kann. Durch Zusammenfügen einer Folge von Leitungen lässt sich so eine kontinuierliche röhrenförmige Einheit bilden, gegebenenfalls mit mehreren Abzweigungen Auch diese weisen Hohlräume auf, die zur Aufnahme herausnehmbarer elektronischer Module geeignet und mit einer drahtlosen optischen Strahlenkommunikation FSO ausgestattet sind. Sie ermöglicht diesen abnehmbaren elektronischen Modulen, digitale Nachrichten zu senden und zu empfangen. Die drahtlose optische Kommunikation findet dabei im Inneren der röhrenförmigen Leitungen statt.

## Claims

1. An electric power distribution apparatus composed of a tubular pipe (1A) comprising one or more cavities (1B) suitable for receiving removable electronic modules equipped with a wireless optical beam communication, FSO, allowing said removable electronic modules to transmit and receive digital frames, said wireless optical beam communication operating inside the tubular pipe

2. The apparatus according to claim 1 wherein said tubular pipe can be mechanically coupled to a tubular pipe of same features so as to construct by successively coupling such pipes, a system of continous tubular pipes, optionnaly comprising several legs, comprising multiple cavities suitable for receiving removable electronic modules equipped with a wireless optical beam communication, FSO, allowing said removable electronic modules to transmit and receive digital frames, said wireless optical beam communication operating inside the tubular pipes.
